# EUROPEAN PATENT APPLICATION

(11) **EP 1 302 907 A1**
(43) Date of publication of application: **16.04.2003**
(21) Application number: 01203919.4
(22) Date of filing: 15.10.2001
(51) Int. Cl.: G07C 9/00

(54) **Method and system for processing personal characteristics**

(71) Applicant: Koninklijke KPN N.V., 9726 AE Groningen (NL)
(72) Inventor: Gelbord, Boaz Simon, 1018 VV Amsterdam (NL); Roelofsen, Gerrit, 2331 AH Leiden (NL)
(74) Representative: Wuyts, Koenraad Maria

(57) **Abstract**

Method and a system for processing natural characteristics like e.g. fingerprint, by means of a portable device (8), comprising means (3a) for inputting a user's PIN code and means (3) for inputting the user's natural biometric data, e.g. fingerprint. Both input means are connected to transformation means (4) which transform the natural fingerprint under control of the PIN code into an artificial fingerprint, to be supplied to a display module (5a). The displayed artificial fingerprint can replace the user's natural fingerprint when the user has to prove his/her identity. If the artificial fingerprint might become corrupt or misused, a new artificial fingerprint can be generated by inputting again the user's unchangeable natural fingerprint and together with a new PIN code.

## Description

### FIELD OF THE INVENTION

The invention relates to a method and system for processing a person's personal characteristics.

### BACKGROUND OF THE INVENTION

The use of identification based on personal characteristics like biometric information is growing. Though the techniques for biometric identification have matured, there are at least two major problems. One problem is the unwillingness of people to provide their personal (biometric) characteristics (data) for e.g identification or verification purposes. A first reason is that people fear that a receiver (verifier) of the data can misuse it. A second reason comprises the negative feelings associated with providing such personal data as fingerprints, retina (iris) scans etc. A second problem is the threat that another party could masquerade as the valid party by obtaining a copy of the biometric data. By obtaining a copy of another person's fingerprint e.g, one could masquerade as that person.

Using strict personal data like biometric characteristics is more sensitive for misuse than other sorts of identification data since biometric identification data cannot be replaced with a "new version".

### SUMMARY OF THE INVENTION

The invention aims to remedy the drawbacks mentioned.

One aspect of the invention is to transform personal characteristics viz. a person's biometric image like a fingerprint etc., to an artificial biometric image which is not strictly related to a person. One aspect of the invention is that the transformation process may be influenced or controlled by means of personal parameters e.g. a person's PIN.

One aspect of the invention is that the transformation may be realised by means of a transformation device ("token") which captures the original biometric image and transforms it to an artificial image; transformation parameters may be entered into the token. The relevant person's personal data -like his/her fingerprint and PIN- are input into the token, which transforms those data into an artificial "fingerprint", which may be displayed and subsequently be input into a "normal" input device for fingerprints.

One aspect of the invention is that said token may comprise an input module for e.g. a fingerprint, a PIN input module, a transformation module and an output module, displaying the artificial "fingerprint". The purpose of the token is to replace a user's original fingerprint by an artificial fingerprint. The artificial fingerprint, resulting from the user's own natural fingerprint and his/her PIN code, may be supplied to a state-of-the-art fingerprint reader, in use for e.g. access control, which thus uses the artificial fingerprint instead of the person's original fingerprint. Of course, to operate well, in an initial stage an artificial fingerprint of a person who is permitted to get access is generated, by means of the transformation device, and input -by bringing the transformation device's output display means together with the reader's input means- into the fingerprint reader and registered into a fingerprint database. In a later stage, when the same person requests for access, he/she enters his/her finger to the transformation token and inputs his/her PIN. The token converts -under control of the PIN- the person's natural fingerprint to an artificial fingerprint, which is displayed by the token and supplied to the fingerprint reader.

In another aspect of the present invention are disclosed a method and a system for processing natural characteristics like e.g. fingerprint, by means of a portable device, comprising means for inputting a user's PIN code and means for inputting the user's natural biometric data, e.g. fingerprint. Both input means are connected to transformation means which transform the natural fingerprint under control of the PIN code into an artificial fingerprint, which can be supplied to a display module. The displayed artificial fingerprint can replace the user's natural fingerprint when the user has to prove his/her identity. If the artificial fingerprint might become corrupt or misused, a new artificial fingerprint can be generated by inputting again the user's unchangeable natural fingerprint and together with a new PIN code.

The invention solves the problems described above. The first problem is solved by transforming a person's natural characterizing data image to a unique artificial image of the same kind (format), to be used for e.g. identification or verification. The second problem is solved by not storing natural (biometric) images e.g in a reference database, so that the original image cannot be compromised. In case of a compromise of a person's unique artificial identification image, it is easy to generate a new one, viz. by using a new PIN code.

### EXEMPLARY EMBODIMENTS

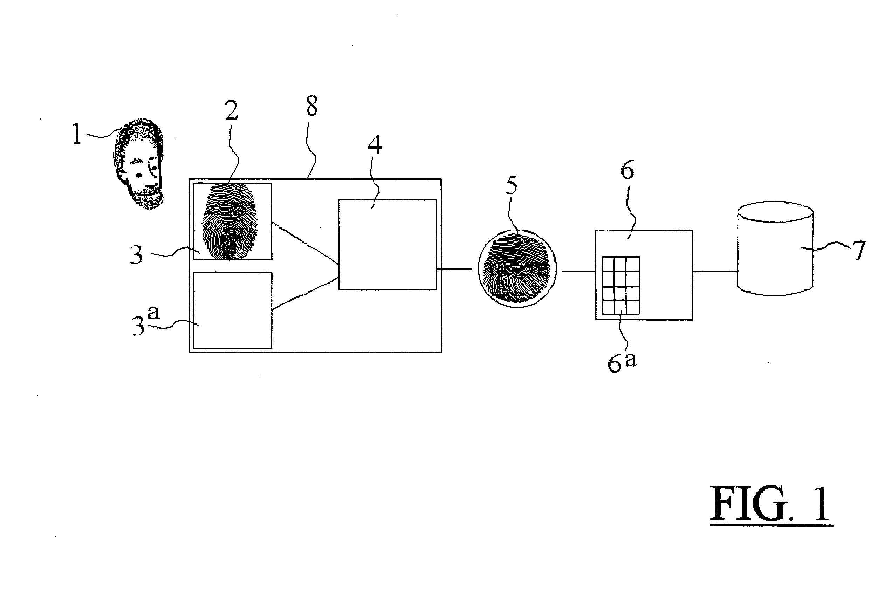

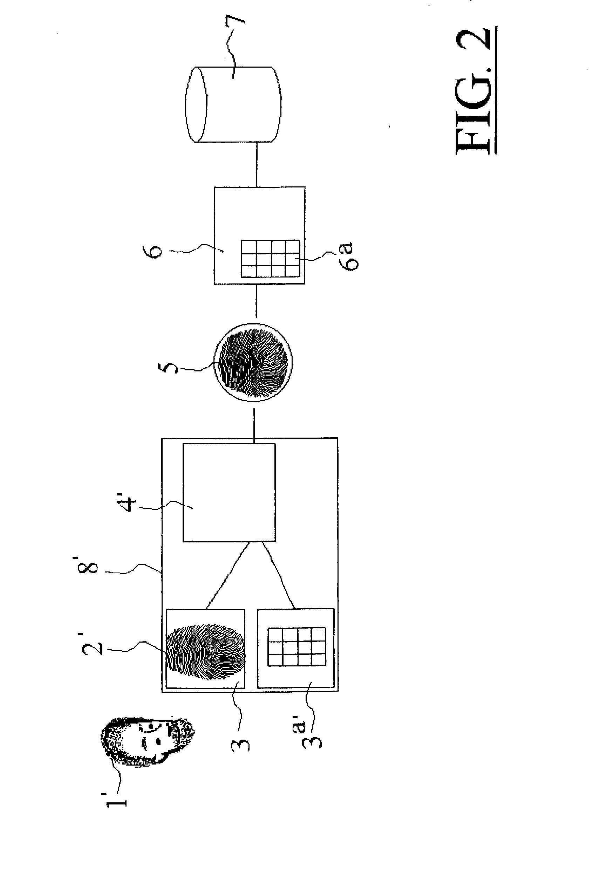

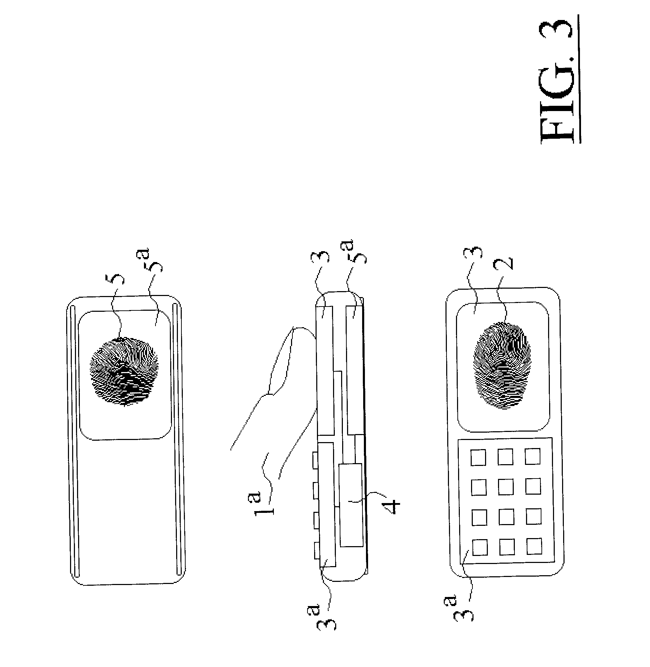

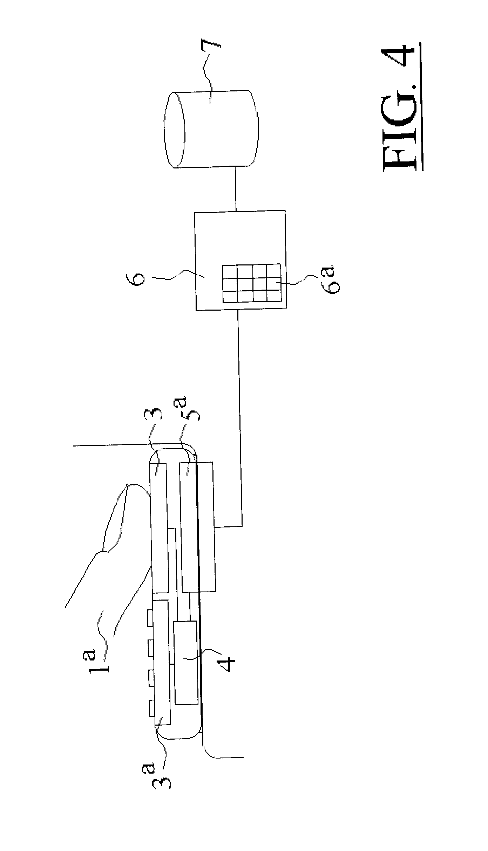

Figures 1 and 2 show an exemplary embodiment of a system for processing biometric identification information of a user 1 resp. 1' in accordance with the present invention. Figure 3 shows an exemplary embodiment of a "token" module; figure 4 shows that module cooperating with the remaining of the system.

Figure 1 shows an input module 3 for in an initialisation stage, inputting a first instance of the user's identification record, having a particular biometric format, viz. (the format of) the fingerprint 2 of user 1.

After being input, the fingerprint 2 is transformed, by a transforming module 4, in accordance with a transformation algorithm, into a first instance of an output record, which has a content different from the content of the first instance of the identification record, viz. the fingerprint 2, but which has the same biometric format. Except his fingerprint 2, the user 1 inputs via a keypad-like input module 3a control data for controlling the transformation algorithm of the transmation module 4; the control data may comprise the user's PIN code. Module 4 transforms the entered natural fingerprint 2 into another, artificial fingerprint 5 under control of the user's PIN code. Modules 3, 3a and 4 form together a (portable) "token" 8 by which user 1 converts his natural fingerprint 2 into an artificial fingerprint, usable for e.g. proving his identity.

Next, the artificial fingerprint 5, generated and output by the transformation module 4, is input in a fingerprint processor 6, fit for inputting and processing fingerprint-like records, and stored in storage module 7 together with a user ID, to be entered e.g via a key pad 6a.

It is noted here that the fingerprint processor 6 and the storage module 7 may consist in commercially available modules, fit for fingerprint-based identification. So such he system doesn't need any new software or hardware adaptations, while the disadvantages of the the prior-art system are remedied by transforming each user's own fingerprint 2 into an artificial fingerprint which is as unique as the user's original natural fingerprint.

Figure 2 shows the system's operation during an operational stage, in due time, when a user 1' has to prove his identity by means of his fingerprint.

The user 1' inputs a second instance of the identification record, viz. his fingerprint 2' in input device 3', part of token 8'. It is noted that token 8' may or may not be the same one as token 8 as long as the transformation algorithms of both modules 4 resp. 4' are equal. The user keys in, via input module 3a', his PIN code and enters his natural fingerprint 2', which is transformed -under control of the PIN code- by transformation module 4' into an artificial fingerprint 5' (in general: a second instance of the output record, having a content different from the content of the second instance of the identification record, but having the same biometric format as the first and second instance of the identification record).

A retrieval module, incorporated in processor 6, retrieves, guided by the user's ID entered via key pad 6a', the stored artificial fingerprint related to user 1, from the storage module 7.

An investigation module, also incorporated in processor 6, investigates whether the artificial fingerprint 5' is or is not identical to the artificial fingerprint from database 7.

It is clear that a system for processing fingerprints as depicted, can, mutatis mutandis, also be used for processing other record formats, e.g. iris scans etc.

Figure 3 shows more in detail an exemplary embodiment of the portable "token" module 8 with which a user can generate an artificial fingerprint based on his natural fingerprint and his PIN code. The casing of the "token" contains the already mentioned fingerprint input module 3, the PIN code key pad 3a, the transformation module 4 and an artificial fingerprint output module 5a. A user 1 keys in his PIN code at key pad 3a and subsequently presses his finger upon input module 3. Module 4 converts both inputs to an artificial fingerprint which is displayed by module 5a, at the token's backside.

Figure 4 illustrates that subsequently the token, displaying, on it's backside the generated artificial fingerprint, is brought into connection with an input module 6b, being part of a commercially avialable fingerprint system, comprising processor 6 and database 7. In both stages, viz. in the intitialisation (registration) stage during which the first occurence of the artificial fingerprint is entered and stored into the fingerprint identification system, as well as in the subsequent identification/verification stage during which the user's fingerprint is verified with his stored fingerprint, use is made of the transformation token 8 which in both stages generates an artificial fingerprint based on the user's natural fingerprint and his PIN code. If, at a certain moment, it might be neccessary or desired to make use of a different fingerprint, the user, making use of the transformation token according to this invention, is able to change his unique fingerprint by simply changing his PIN code. Of course the user has to register, as a new intitial stage, again his (new) unique fingerprint, by which he after that moment is able to prove his identity.

## Claims

1. Method for processing biometric identification information of a user, **CHARACTERIZED BY**
the following initialisation steps, for inputting, transforming and storage of the user's biometric identification information:
- a first instance (2) of an identification record, having a certain biometric format, is input;
- the content of the first instance of the identification record is transformed, in accordance with a transformation algorithm, into the first instance (5) of an output record, having a content different from the content of the first instance of the identification record; optionally, the first instance of the output record is stored;
said initial steps being followed, by the following operational steps:
- a second instance (2') of the identification record is input;
- the content of the second instance of the identification record is transformed, in accordance with an transformation algorithm, substantially equal to said transformation algorithm, into a second instance (5') of the output record, having a content different from the content of the second instance of the identification record.

2. The method as recited in claim 1 further comprising the steps of;
- the stored first instance (5) of the output record is retrieved
- the second instance (5') of the output record is investigated whether it is identical or not-identical to the retrieved first instance (5) of the output record.

3. Method according to claim 2, **CHARACTERIZED IN that** the identification record and the output record have the same biometric format.

4. Method according to claim 2, **CHARACTERIZED IN that** said transformation algorithm is controlled by data input by said user.

5. Method according to claim 3, **CHARACTERIZED IN that** said data comprises an user's PIN code.

6. Method according to claim 2 or 3, **CHARACTERIZED IN that** the biometric format of the identification record and/or the output record is fit for fingerprint based identification.

7. Method according to claim 2 or 3, **CHARACTERIZED IN that** said the biometric format of the identification record and/or the output record is fit for iris or retina based identification.

8. System for processing biometric identification information of a user, **CHARACTERIZED BY**
input means (3) for, in an initialisation stage, inputting a first instance of an identification record, having a particular biometric format,
transforming means (4) for transforming the content of the first instance of the identification record, in accordance with a transformation algorithm, into the first instance (5) of an output record, having a content different from the content of the first instance of the identification record, and optionally
storage means (6,7) for storage the first instance of output record, as well as input means (3') for in an operational stage, inputting a second instance (2') of the identification record,
transformation means (4') for transforming the content of the second instance of the identification record, in accordance with a transfaormation algorithm which is substantially equal to said transformation algorithm, into a second instance (5') of the output record, having a content different from the content of the second instance of the identification record.

9. The system as recited in claim 8 further comprising
retrieval means (6) for retrieval the stored first instance (5) of the output record from said storage means; and investigation means (6) for investigation whether said second instance (5') of the output record is identical or not-identical to the retrieved first instance (5) of the output record.

10. System according to claim 9, **CHARACTERIZED IN** input means (3a) for inputting control data by said user for controlling the transformation algorithm of said transmation means.

11. System according to claim 10, **CHARACTERIZED IN that** said control data comprises an user's PIN code.

12. System according to claim 9, **CHARACTERIZED IN that** said particular biometric format is fit for fingerprint based identification and that said investigation means (6) are fingerprint investigation means.

13. System according to claim 6, **CHARACTERIZED IN that** said particular biometric format is fit for iris or retina based identification and that said investigation means (6) are iris or retina investigation means.

14. Device (8), comprising means (3a) for inputting a user's PIN code and means (3) for inputting the user's natural biometric data, connected to transformation means (4) for transforming said biometric data under control of said PIN code into artificial biometric data, optionally to be supplied to a display module (5a).
